(19) **Europäisches Patentamt**
**European Patent Office**
**Office européen des brevets**

(11) **EP 2 502 241 B1**

(12) **FASCICULE DE BREVET EUROPEEN**

(45) Date de publication et mention
de la délivrance du brevet:
**04.09.2013 Bulletin 2013/36**

(51) Int Cl.:
*H01F 1/34* (2006.01)       *C04B 35/26* (2006.01)
*H01F 17/00* (2006.01)      *C04B 35/626* (2006.01)
*H01F 27/255* (2006.01)

(21) Numéro de dépôt: **10776384.9**

(86) Numéro de dépôt international:
**PCT/EP2010/067607**

(22) Date de dépôt: **16.11.2010**

(87) Numéro de publication internationale:
**WO 2011/061199 (26.05.2011 Gazette 2011/21)**

(54) **MATERIAU FERRITE A FAIBLES PERTES POUR FONCTIONNEMENT A HAUTE FREQUENCE ET DANS UNE LARGE GAMME DE TEMPERATURE**

FERRITMATERIAL MIT GERINGEN VERLUSTEN FÜR HOCHFREQUENZ-BETRIEB IN EINEM BREITEN TEMPERATURBEREICH

LOW LOSSES FERRITE MATERIAL FOR HIGH FREQUENCY OPERATION IN A WIDE TEMPERATURE RANGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.11.2009 FR 0905515**

(43) Date de publication de la demande:
**26.09.2012 Bulletin 2012/39**

(73) Titulaire: **Thales**
**92200 Neuilly Sur Seine (FR)**

(72) Inventeurs:
• **LEBOURGEOIS, Richard**
  **F-91190 Gif sur Yvette (FR)**
• **LUCAS, Anthony**
  **F-50310 Emondeville (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 1 842 837       GB-A- 2 347 417**
**JP-A- 2002 134 312**

EP 2 502 241 B1

**Description**

La présente invention concerne des matériaux ferrites utilisés à haute et très haute fréquence (entre 1 MHz et 100 MHz) et plus particulièrement des matériaux présentant de faibles pertes magnétiques pour des puissances appliquées importantes et pour des fonctionnements dans une large gamme de température, typiquement comprises entre - 50°C et + 150 °C.

Ces matériaux sont plus particulièrement destinés à être intégrés dans des amplificateurs de puissance radiofréquences ou des alimentations à découpage haute fréquence. Leurs avantages sont une faible température de frittage (T < 1000° C), une perméabilité ajustable entre 10 et 1000, de faibles pertes magnétiques à haute et très haute fréquence, un fonctionnement possible dans une large gamme de température et un coût de fabrication réduit.

Les ferrites décrits dans la présente invention sont particulièrement adaptés pour la réalisation de noyaux magnétiques faibles pertes pour des applications de fortes puissances volumiques (10 à 100 W/cm$^3$), des applications à haute et très haute fréquence, des applications très large bande de fréquence, des applications dans une large gamme de température ou des applications d'électronique intégrée dans la gamme de fréquence des radiocommunications.

Actuellement, le développement des matériels électroniques, tant dans les applications civiles que militaires, est lié à la miniaturisation des composants passifs et actifs. Parmi ces composants, les plus volumineux sont les composants passifs inductifs (inductance ou transformateur). Lorsqu'on réduit le volume des composants inductifs, la densité volumique de puissance augmente ce qui conduit à une augmentation de la température de fonctionnement. Les rendements diminuent ainsi que la durée de vie des matériels électroniques.

Dans les applications qui mettent en oeuvre de fortes puissances électriques, les pertes du composant inductif sont déterminées essentiellement par les pertes magnétiques dites pertes totales du matériau magnétique utilisé pour la réalisation du noyau.

Dans la gamme des hautes fréquences (f > 1 MHz), on utilise pour ces applications des ferrites de nickel-zinc en raison de leurs propriétés magnétiques adaptées et de leur résistivité électrique élevée.

Selon l'art connu, les ferrites « faibles pertes » destinés aux applications haute fréquence (f > 1 MHz) sont généralement des ferrites de nickel-zinc de formule chimique $Ni_xZn_yFe_2O_4$ avec x + y = 1. Ils sont utilisés comme noyaux magnétiques de formes variées (tores, pots, bâtonnets, etc.) permettant la réalisation d'inductances ou de transformateurs bobinés, la partie bobinage étant réalisée à l'aide de fil de cuivre émaillé ou de conducteur coaxial.

Le brevet GB 2 347 417 A présente un exemple de ferrite du type $(NiZuCoCoZr)$ $Fe_2O_4$ utilisé dans une inductance.

Les performances de ces composants sont souvent limitées par les pertes totales du ferrite qui de ce fait déterminent les dimensions du composant, l'échauffement et la puissance électrique incidente admissible.

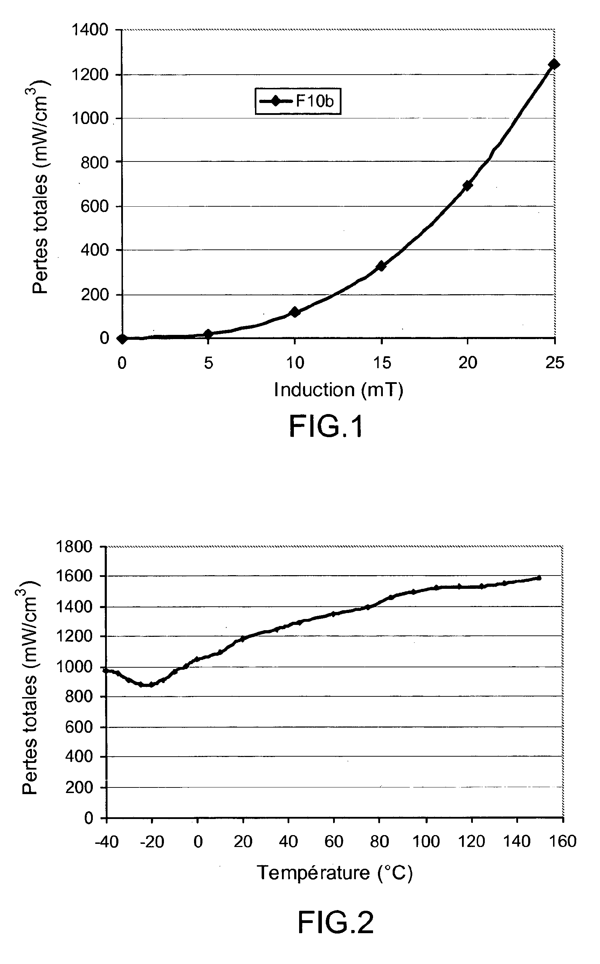

La figure 1 indique les performances typiques, à 20°C, d'un ferrite nickel-zinc commercial (Neosid F10b) optimisé pour des fonctionnements à très haute fréquence. Elle représente la variation des pertes totales mesurées à 1,5 MHz en fonction de l'induction et à température ambiante. La mesure est effectuée sur un tore bobiné à l'aide d'un fil de cuivre émaillé. La perméabilité initiale statique du ferrite vaut 100. La composition chimique de ce ferrite est $Ni_{0,6}Zn_{0,4}Fe_2O_4$.

La figure 2 donne les performances typiques, en fonction de la température, du même ferrite nickel-zinc commercial (F10b). Elle indique les pertes totales volumiques mesurées à 1.5 MHz et 25 mT entre -40°C et +150°C.

La présente invention propose dans ce contexte une nouvelle famille de matériaux ferrites présentant de faibles pertes magnétiques aussi bien à bas niveau d'induction qu'à fort niveau d'induction (de 0,1 mT à 50 mT), à haute et très haute fréquence (de l'ordre de 1 à 100 MégaHertz) et dans une large gamme de température. Ces ferrites contiennent du nickel, du zinc, du cuivre, du cobalt, du magnésium et du zirconium.

Plus précisément l'invention a pour objet un matériau ferrite de type spinelle à base de nickel et de zinc caractérisé en ce qu'il répond à la formule chimique suivante :

$$Ni_xMg_yZn_tCu_wCO_\varepsilon Zr_zFe_{2-\delta}O_4$$

avec

$$2.(x + y + t + w + \varepsilon) + 4.z + 3.(2 - \delta) = 8$$

$$0 < \delta \leq 0,05$$

$$0,005 \le \varepsilon \le 0,05$$

$$0,001 \le z \le 0,01$$

$$0,005 \le y \le 0,1$$

$$0,02 \le w \le 0,20$$

Selon une variante de l'invention, $\varepsilon$ est compris entre environ 0,005 et 0,03.

Selon une variante de l'invention, y est compris entre environ 0,005 et 0,05.

Selon une variante de l'invention, w est compris entre environ 0,05 et 0,20.

Selon une variante de l'invention, le ratio pondéral oxyde de bismuth / matériau ferrite est compris entre 0,2 % et 1 % .

Avantageusement la proportion y en magnésium peut être comprise entre environ 0,005 et 0,1.

Avantageusement la proportion z en zirconium peut être comprise entre environ 0,001 et 0,01.

L'invention a aussi pour objet un matériau composite comprenant le matériau ferrite de l'invention et de l'oxyde de bismuth.

Avantageusement le ratio pondéral oxyde de bismuth / matériau ferrite peut être compris entre 0,1 % et 1 %.

L'invention a aussi pour objet un composant magnétique comprenant un noyau magnétique en matériau ferrite spinelle selon l'invention.

Avantageusement le composant magnétique peut être utilisé pour des applications à des hautes fréquences supérieures à environ 1 MégaHertz.

Selon une variante de l'invention, le composant magnétique fonctionne pour une induction comprise entre environ 0 et 50 mTesla dans une gamme de fréquence de l'ordre de 1 à 100 MégaHertz

Avantageusement le composant magnétique proposé dans l'invention peut être une inductance ou un transformateur comprenant un noyau bobiné avec notamment du cuivre émaillé ou du conducteur coaxial.

Avantageusement le composant magnétique proposé dans l'invention peut être une inductance ou un transformateur comprenant un ensemble cofritté constitué du ferrite décrit dans l'invention et de l'argent, un alliage argent-palladium, de l'or ou du cuivre.

Typiquement les inductances ou les transformateurs selon l'invention peuvent être utilisés dans des gammes de fréquences comprises entre environ 1 et 100 MégaHertz.

L'invention a encore pour objet une alimentation à découpage où un convertisseur d'énergie électrique utilisant une inductance ou un transformateur selon l'invention.

L'invention a aussi pour objet un procédé de fabrication d'un matériau ferrite selon l'invention caractérisé en ce qu'il comprend les étapes suivantes :

- le pesage des matières premières de types oxydes ou carbonates pour obtenir la composition du matériau ferrite de type spinelle selon l'invention ;
- le mélange et un premier broyage des matières premières en jarres ou par attrition ;
- le chamottage (ou calcination) à une température comprise entre environ 700 et 850°C, en une seule ou plusieurs étapes ;
- un second broyage de la poudre obtenue, suivi d'un pressage ;
- le frittage de la dite poudre rebroyée à une température comprise entre environ 800°C et 1100°C, sous air ou sous une atmosphère constituée d'un mélange gazeux oxygène-azote ou oxygène-argon.

L'invention a également pour objet un procédé de fabrication du matériau, caractérisé en ce qu'il comprend les étapes suivantes :

- le pesage des matières premières de types oxydes ou carbonates pour obtenir la composition du matériau ferrite de type spinelle selon l'invention ;
- le mélange et un premier broyage des matières premières ;
- le chamottage (ou calcination) à une température comprise entre environ 700 et 850°C, en une seule ou plusieurs étapes ;

- un second broyage de la poudre obtenue ;
- le mélange de ladite poudre rebroyée avec des produits organiques (liants, défloculants, surfactants...) pour la réalisation d'une pâte ;
- le dépôt en couche épaisse de cette pâte par coulage ou sérigraphie ;
- la réalisation d'une structure multicouche constituée d'un empilement de couches de matériau ferrite, de diélectrique et de métal (argent, argent-palladium, or ou cuivre) ;
- le frittage de ladite structure multicouche à une température comprise entre 800 et 1100 °C.

Avantageusement le procédé selon l'invention peut également comprendre l'ajout d'un fondant sous forme de $Bi_2O_3$.

Cette opération peut être réalisée après le second broyage, à sec ou en milieu humide, ou avant le second broyage en milieu humide.

L'invention sera mieux comprise et d'autres avantages apparaîtront à la lecture de la description qui va suivre donnée à titre non limitatif et grâce aux figures annexées parmi lesquelles :

- la figure 1 représente la variation des pertes totales mesurées à 1,5 MégaHertz, en fonction de l'induction à température ambiante d'un tore bobiné de 20 spires comprenant un ferrite classique de l'art antérieur de référence F 10b de Neosid ;
- la figure 2 représente la variation des pertes totales mesurées à 1,5 MégaHertz, en fonction de la température pour une induction de 25 mT, d'un tore bobiné de 20 spires comprenant un ferrite classique de l'art antérieur de référence F 10b ;
- la figure 3 illustre la variation des pertes totales en fonction de l'induction d'un exemple de ferrite (référence 1) selon l'invention ;
- la figure 4 illustre l'évolution des pertes totales en fonction de la température pour des exemples de ferrite de l'invention (références 1 et 2);
- la figure 5 illustre l'évolution des pertes en fonction de la température pour des exemples de ferrite selon l'invention (références 3 et 4) ;
- la figure 6 illustre la tenue en puissance traduite par la mesure des pertes en fonction de la température pour des exemples de ferrite selon l'invention (références 2 et 5).

De manière générale le matériau ferrite selon l'invention répond à la formule chimique $Ni_xMg_yZn_tCu_wCo_\varepsilon Zr_zFe_{2-\delta}O_4$.

Ce matériau peut être obtenu selon un procédé d'élaboration de l'art connu et notamment décrit dans le brevet EP 0800183.

La première partie du procédé d'élaboration consiste à obtenir une poudre de ferrite selon les étapes suivantes :

Pesée des matières premières suivantes :

Oxyde de nickel (NiO), oxyde de zinc (ZnO), oxyde de fer ($Fe_2O_3$) oxyde de cuivre (CuO), oxyde de cobalt ($CO_3O_4$), oxyde de zirconium ($ZrO_2$) et oxyde de magnésium (MgO).

Lors de la pesée de l'oxyde de fer, il est nécessaire de compenser l'apport de fer dû à l'usure des éléments de broyage qui sont généralement des billes et un bol en acier.

Broyage des matières premières

Cette opération a pour double but de mélanger les différents constituants et de réduire leur taille de grains, les rendant ainsi plus réactifs.

Chamottage de la poudre

Ce traitement thermique a pour but de former en partie la phase cristalline recherchée. Cette opération peut typiquement être réalisée entre 750°C et 850°C selon la nature recherchée du matériau ferrite selon l'invention, sous air durant environ 2 heures.

Rebroyage du produit de chamottage

Cette opération est rendue nécessaire par le grossissement des grains de poudre induit par le chamottage. Elle est effectuée dans des conditions analogues à celles du premier broyage.

Ajout d'un fondant sous forme de $Bi_2O_3$

Cette opération peut être réalisée après le second broyage, à sec ou en milieu humide, ou avant le second broyage en milieu humide. Elle a pour but l'obtention d'un mélange homogène de la poudre de ferrite et de l'oxyde fondant. L'oxyde fondant améliore la densification et abaisse la température de frittage.

Le tableau 1 ci-dessous regroupe des exemples de compositions en moles d'oxydes de ferrites selon la présente invention :

Tableau 1

| | NiO | ZnO | CuO | $Co_3O_4$ | $ZrO_2$ | MgO | $Fe_2O_3$ | $Bi_2O_3$ |
|---|---|---|---|---|---|---|---|---|
| Référence 1 | 0.334 | 0.545 | 0.1 | 0.007 | 0 | 0 | 0.98 | 0 |
| Référence 2 | 0.334 | 0.545 | 0.1 | 0.007 | 0.001 | 0 | 0.98 | 0 |
| Référence 3 | 0.284 | 0.545 | 0.15 | 0.007 | 0.003 | 0 | 0.98 | 0 |
| Référence 4 | 0.274 | 0.535 | 0.15 | 0.007 | 0 | 0.02 | 0.98 | 0 |
| Référence 5 | 0.334 | 0.545 | 0.1 | 0.007 | 0.001 | 0 | 0.98 | 0.002 |

Le frittage des 4 premières références a été réalisé à 935°C pendant 2 heures sous air, les masses volumiques ainsi que les propriétés obtenues sont présentées dans le tableau 2 ci-après.

La perméabilité magnétique est mesurée à l'aide d'un impédancemètre HP4291A. Les pertes totales sont mesurées à 1.5MHz et 25mT grâce à un watt-mètre, sur des échantillons toriques bobinés par un fil de cuivre émaillé.

Tableau 2

| | Masse volumique (g/cm$^3$) | Perméabilité statique (à 100kHz) | Pertes totales à 20°C (mW/cm$^3$) |
|---|---|---|---|
| Référence 1 | 5.08 | 180 | 250 |
| Référence 2 | 5.17 | 220 | 180 |
| Référence 3 | 5.29 | 240 | 190 |
| Référence 4 | 5.28 | 230 | 185 |

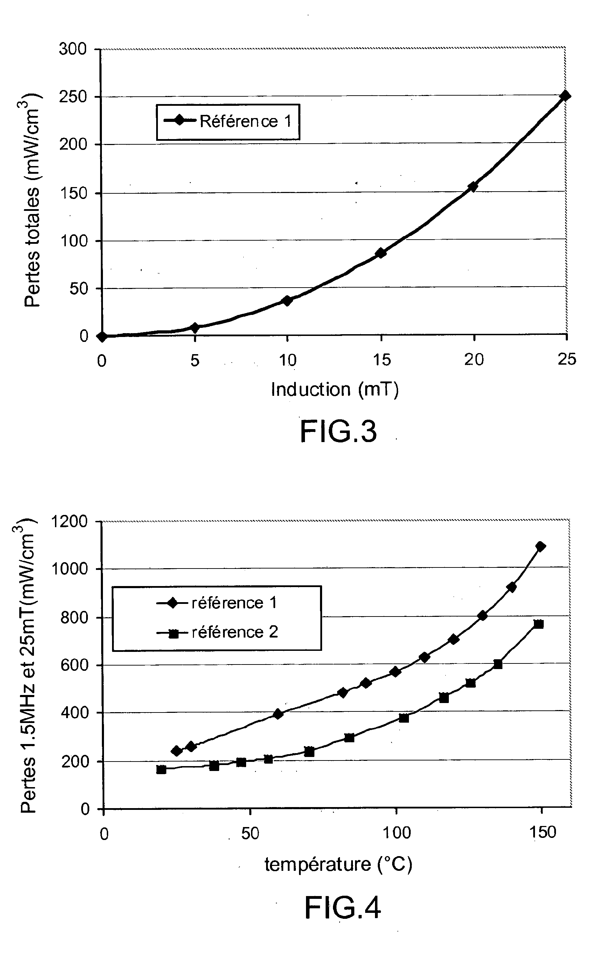

On constate tout d'abord que chaque référence possède des pertes totales inférieures à celle du ferrite de l'art antérieur (F10b). La variation des pertes totales en fonction de l'induction de la référence 1 étant présentée figure 3.

Il ressort également de ce tableau que les dopages au zirconium et au magnésium mènent à de meilleures propriétés dynamiques que le ferrite non dopé.

Cette amélioration de la tenue en puissance est particulièrement notable à haute température comme le montre la figure 4 qui présente l'évolution des pertes totales en fonction de la température pour les références 1 et 2.

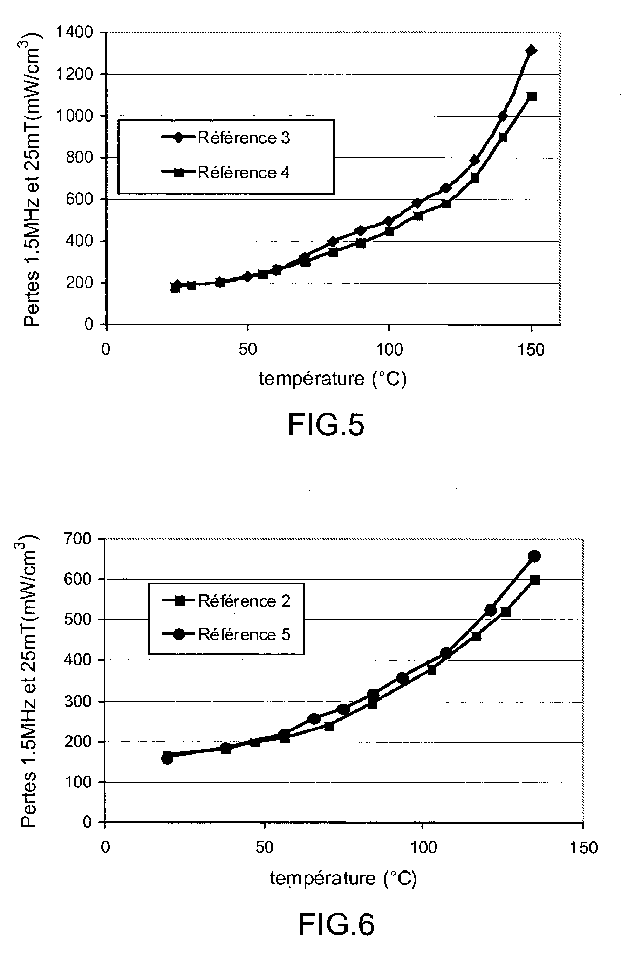

Il en va de même pour le matériau dopé au magnésium (évolution des pertes en fonction de la température des références 3 et 4 présentées en figure 5). La référence 4, contenant du magnésium, possède les pertes les plus faibles à haute température.

Ces ferrites NiZnCu dopés au zirconium et au magnésium peuvent donc être avantageusement utilisés dans un dispositif fonctionnant à haute fréquence et à haute température comme les transformateurs radiofréquences ou pour les alimentations à découpage haute fréquence.

Ces matériaux peuvent également s'inscrire dans l'optique de l'intégration des composants passifs par la technologie LTCC. Ainsi, grâce à un ajout d'oxyde de bismuth, il est possible d'obtenir après frittage à 880°C des propriétés comparables au matériau massif fritté à 935°C comme le montre le tableau 3 :

Tableau 3

| | Frittage | Masse volumique (g/cm$^3$) | Perméabilité statique (à 100kHz) | Pertes totales (mW/cm$^3$) |
|---|---|---|---|---|
| Référence 2 | 935°C / 2h | 5.17 | 220 | 180 |
| Référence 5 | 880°C / 2h | 5.25 | 200 | 175 |

Le frittage à une température inférieure à 900 °C ouvre la possibilité de cofritter le ferrite avec des encres d'argent ou d'autres matériaux tels que des céramiques diélectriques commerciales. De plus, cet ajout de $Bi_2O_3$ ne dégrade en rien la tenue en puissance comme le montre la mesure des pertes en fonction de la température présentée figure 6.

**Revendications**

1. Matériau ferrite de type spinelle à base de nickel et de zinc **caractérisé en ce qu'**il répond à la formule chimique suivante :

$$Ni_xMg_yZn_tCu_wCo_\varepsilon Zr_zFe_{2-\delta}O_4$$

avec :

$$2.(x + y + t + w + \varepsilon) + 4.z + 3.(2 - \delta) = 8$$

$$0 < \delta \leq 0,05$$

$$0,005 \leq \varepsilon \leq 0,05$$

$$0,001 \leq z \leq 0,01$$

$$0,005 \leq y \leq 0,1$$

$$0,02 \leq w \leq 0,20$$

2. Matériau ferrite de type spinelle selon la revendication 1, **caractérisé en ce que** $\varepsilon$ est compris entre 0,005 et 0,03.

3. Matériau ferrite de type spinelle selon l'une des revendications 1 ou 2, **caractérisé en ce que** y est compris entre 0,005 et 0,05.

4. Matériau ferrite de type spinelle selon l'une des revendications 1 à 3, **caractérisé en ce que** w est compris entre 0,05 et 0,20.

5. Matériau composite comprenant un matériau ferrite de type spinelle selon l'une des revendications 1 à 4 et de l'oxyde de bismuth.

6. Matériau composite selon la revendication 5, **caractérisé en ce que** le ratio pondéral oxyde de bismuth / matériau ferrite est compris entre 0,2 % et 1 %

7. Composant magnétique, **caractérisé en ce qu'**il comprend un noyau magnétique en matériau ferrite selon l'une des revendications 1 à 4.

8. Composant magnétique de type transformateur ou inductance selon la revendication 7, **caractérisé en ce que** le noyau magnétique est bobiné avec du cuivre émaillé ou du conducteur coaxial.

9. Composant magnétique selon la revendication 8, **caractérisé en ce qu'**il fonctionne pour une induction comprise entre 0 et 50 mTesla dans une gamme de fréquence de l'ordre de 1 à 100 MégaHertz.

10. Alimentation à découpage **caractérisée en ce qu'**elle comprend un composant magnétique selon l'une des revendications 8 ou 9.

**11.** Inductance **caractérisée en ce qu'**elle comprend un assemblage de couches de matériau ferrite selon l'une des revendications 1 à 4 et de pistes métalliques cofrittés.

**12.** Transformateur multicouches **caractérisé en ce qu'**il comprend un assemblage de couches de ferrite selon l'une des revendications 1 à 4 et de pistes métalliques cofrittées.

**13.** Inductance selon la revendication 11, **caractérisée en ce que** les pistes métalliques sont en argent.

**14.** Inductance selon la revendication 11, **caractérisée en ce que** les pistes métalliques sont en cuivre.

**15.** Transformateur selon la revendication 12, **caractérisé en ce que** les pistes métalliques sont en argent.

**16.** Transformateur selon la revendication 12, **caractérisé en ce que** les pistes métalliques sont en cuivre.

**Patentansprüche**

**1.** Ferritmaterial vom Typ Spinell auf Nickel- und Zinkbasis, **dadurch gekennzeichnet, dass** es der folgenden chemischen Formel entspricht:

$$Ni_xMg_yZn_tCu_wCo_\varepsilon Zr_zFe_{2-\delta}O_4$$

mit:

$$2.(x + y + t + w + \varepsilon) + 4.z + 3.(2 - \delta) = 8$$

$$0 < \delta \leq 0,05$$

$$0,005 \leq \varepsilon \leq 0,05$$

$$0,001 \leq z \leq 0,01$$

$$0,005 \leq y \leq 0,1$$

$$0,02 \leq w \leq 0,20$$

**2.** Ferritmaterial vom Typ Spinell nach Anspruch 1, **dadurch gekennzeichnet, dass** $\varepsilon$ zwischen 0,005 und 0,03 inklusive ist.

**3.** Ferritmaterial vom Typ Spinell nach einem der Ansprüche 1 oder 2, **dadurch gekennzeichnet, dass** y zwischen 0,005 und 0,05 inklusive ist.

**4.** Ferritmaterial vom Typ Spinell nach einem der Ansprüche 1 bis 3, **dadurch gekennzeichnet, dass** w zwischen 0,05 und 0,20 inklusive ist.

**5.** Verbundmaterial, das ein Ferritmaterial vom Typ Spinell nach einem der Ansprüche 1 bis 4 und Wismutoxid umfasst.

**6.** Verbundmaterial nach Anspruch 5, **dadurch gekennzeichnet, dass** das Gewichtsverhältnis Wismutoxid/Ferritmaterial zwischen 0,2 % und 1 % inklusive ist.

**7.** Magnetisches Bauteil, **dadurch gekennzeichnet, dass** es einen Magnetkern aus Ferritmaterial nach einem der Ansprüche 1 bis 4 umfasst.

8. Magnetisches Bauteil vom Typ Transformator oder Induktivität nach Anspruch 7, **dadurch gekennzeichnet, dass** der Magnetkern mit emailliertem Kupfer oder koaxialem Leiter gewickelt ist.

9. Magnetisches Bauteil nach Anspruch 8, **dadurch gekennzeichnet, dass** es für eine Induktion zwischen 0 und 50 mTesla in einem Frequenzbereich in der Größenordnung von 1 bis 100 Megahertz arbeitet.

10. Schaltnetzteil, **dadurch gekennzeichnet, dass** es ein magnetisches Bauteil nach einem der Ansprüche 8 oder 9 umfasst.

11. Induktivität, **dadurch gekennzeichnet, dass** sie einen Aufbau von Schichten eines Ferritmaterials nach einem der Ansprüche 1 bis 4 und von co-gesinterten Metallbahnen umfasst.

12. Mehrschicht-Transformator, **dadurch gekennzeichnet, dass** er einen Aufbau von Ferritschichten nach einem der Ansprüche 1 bis 4 und von co-gesinterten Metallbahnen umfasst.

13. Induktivität nach Anspruch 11, **dadurch gekennzeichnet, dass** die Metallbahnen aus Silber sind.

14. Induktivität nach Anspruch 11, **dadurch gekennzeichnet, dass** die Metallbahnen aus Kupfer sind.

15. Transformator nach Anspruch 12, **dadurch gekennzeichnet, dass** die Metallbahnen aus Silber sind.

16. Transformator nach Anspruch 12, **dadurch gekennzeichnet, dass** die Metallbahnen aus Kupfer sind.

**Claims**

1. A nickel and zinc based ferrite material of the spinel type, **characterised in that** it complies with the following chemical formula:

$$Ni_xMg_yZn_tCu_wCo_\varepsilon Zr_zFe_{2-\delta}O_4$$

with:

$$2.(x + y + t + w + \varepsilon) + 4.z + 3.(2 - \delta) = 8$$

$$0 < \delta \leq 0.05$$

$$0.005 \leq \varepsilon \leq 0.05$$

$$0.001 \leq z \leq 0.01$$

$$0.005 \leq y \leq 0.1$$

$$0.02 \leq w \leq 0.20.$$

2. The ferrite material of the spinel type according to claim 1, **characterised in that** $\varepsilon$ is between 0.005 and 0.03.

3. The ferrite material of the spinel type according to claim 1 or 2, **characterised in that** y is between 0.005 and 0.05.

4. The ferrite material of the spinel type according to any one of claims 1 to 3, **characterised in that** w is between 0.05 and 0.20.

5. A composite material comprising a ferrite material of the spinel type according to any one of claims 1 to 4 and bismuth oxide.

6. The composite material according to claim 5, **characterised in that** the bismuth oxide/ferrite material weight ratio is between 0.2% and 1%.

7. A magnetic component, **characterised in that** it comprises a magnetic core made from ferrite material according to any one of claims 1 to 4.

8. The magnetic component of the transformer or inductor type according to claim 7, **characterised in that** said magnetic core is wound with enamelled copper or coaxial conductor.

9. The magnetic component according to claim 8, **characterised in that** it operates for an induction between 0 and 50 mTesla within a frequency range of the order of 1 to 100 megahertz.

10. A switch-mode power supply, **characterised in that** it comprises a magnetic component according to claim 8 or 9.

11. An inductor, **characterised in that** it comprises an assembly of layers of ferrite material according to any one of claims 1 to 4 and of co-sintered metal tracks.

12. A multi-layered transformer, **characterised in that** it comprises an assembly of layers of ferrite according to any one of claims 1 to 4 and of co-sintered metal tracks.

13. The inductor according to claim 11, **characterised in that** said metal tracks are made from silver.

14. The inductor according to claim 11, **characterised in that** said metal tracks are made from copper.

15. The transformer according to claim 12, **characterised in that** said metal tracks are made from silver.

16. The transformer according to claim 12, **characterised in that** said metal tracks are made from copper.

FIG.1

FIG.2

FIG.3

FIG.4

FIG.5

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2347417 A

- EP 0800183 A